# EUROPEAN PATENT SPECIFICATION

(11) **EP 3 418 614 B1**
(45) Date of publication and mention of the grant of the patent: **08.01.2020**
(21) Application number: 17176786.6
(22) Date of filing: 20.06.2017
(51) Int. Cl.: F16K 37/00, F16K 27/04, F16K 31/02, F24F 11/84, F24F 110/10

(54) **HYDRONIC CONTROL VALVE**
HYDRONISCHES REGELVENTIL
VANNE DE COMMANDE HYDRONIQUE

(43) Date of publication of application: 26.12.2018
(73) Proprietor: Honeywell Technologies Sarl, 1180 Rolle (CH)
(72) Inventor: Prajzner, Vaclav, 63800 Brno (CZ); Sedivy, Jozef, 91338 Soblahov 278 (SK); Kusala, Petr, 68201 Vyskov (CZ); Hrabalek, Zdenek, 68352 Krenovice (CZ)
(74) Representative: Sturm, Christoph

(56) References cited:
- EP-A1- 2 623 823
- WO-A1-2012/028153
- WO-A1-2016/082833
- US-A- 5 904 292
- US-A1- 2005 087 235
- US-A1- 2014 110 613
- US-A1- 2015 088 321

## Description

The invention relates to a hydronic control valve as defined in the preamble of claim 1.

Hydronic control valves are used to control the flow of a hydronic medium within a hydronic installation like in a multi-zone, heating and cooling system. Preferably, the hydronic control valve controls the fluid flow of the hydronic medium as a function of the temperature of the hydronic medium. One example of such a hydronic control valve controlling the fluid flow of the hydronic medium as a function of the temperature of the hydronic medium is a temperature-difference pressure independent control valve.

The product leaflet "Pressure Independent Control Valve, Quick Selection Guide, 67-7258 PR, September 2014, Honeywell Inter-national Inc." discloses the basic concept of pressure independent control valves (PICV). When conventional two-way valves in multi-zone, heating and cooling systems open or close, a pressure change resulting in overflow or underflow is caused. Pressure independent control valves maintain the required flow rate constant by regulating the pressure drop.

Hydronic control valves controlling the fluid flow of the hydronic medium as a function of the temperature of the hydronic medium comprise a temperature sensor for measuring the temperature of the hydronic medium and an an electrical or electronic actuator for operating the valve as a function of the temperature of a hydronic medium.

According to the prior art, the temperature sensor is connected by wires to the electrical or electronic actuator. Such an installation requiring a wiring between temperature sensor and the electrical or electronic actuator is rather complicated, time-consuming and error-prone.

US 5,904,292 A discloses a fluid control device having a valve unit and a control unit according to the preamble of claim 1. The valve unit has a temperature sensor.

WO 2012/028153 A1 discloses a valve system having a valve unit and a control unit. The control unit has a temperature sensor. The control unit and the valve unit may comprise a wireless communications system based on RFID. This RFID communications system is used to set the control unit in accordance with the type valve in question and the need of the plant.

US 2015/0088321 A1 discloses a self-learning closed loop control valve system.

Against this background, a novel hydronic control valve according to claim 1 is provided.

The valve unit of novel hydronic control valve comprises a RFID transmitter, the temperature sensor being connected to RFID transmitter. The actuator unit of novel hydronic control valve comprises a RFID receiver, the electrical or electronic actuator being connected to RFID receiver. The RFID transmitter of the valve unit and the RFID receiver of the actuator unit are adapted to wirelessly transmit the temperature measurement signals provided by the temperature sensor of the valve unit the actuator unit. No wiring is needed between the temperature sensor and the electrical or electronic actuator. The installation of the novel hydronic control valve is less complicated, less time-consuming and less error-prone.

The temperature sensor of the valve unit and the RFID transmitter of the valve are both provided by printed circuit board, a first section of the printed circuit board providing the temperature sensor, a second section of the printed circuit board providing the RFID transmitter, a third section of the printed circuit board connecting the temperature sensor and RFID transmitter. No wiring is needed between the temperature sensor and the electrical or electronic actuator.

Preferably, the first section of the printed circuit board providing the temperature sensor is accommodated in a groove of the valve housing. The second section of the printed circuit board providing the RFID transmitter is accommodated in an adapter body through which the actuator unit is mounted to the valve unit. This provides good temperature contact for the temperature sensor and mechanical protection for the RFID transmitter.

Preferably, the RFID transmitter of the valve unit is passive and the RFID receiver of the actuator unit is active providing energy for the RFID operation. No wiring is needed between the temperature sensor and the electrical or electronic actuator.

Preferably, hydronic control valve is an electrical or electronic, temperature-difference pressure independent control valve. The use of the invention in connection with such a pressure independent control valve (PICV) is preferred.

Preferably, the valve housing provides a first connection terminal being in communication with the valve inlet for the hydronic medium and a second connection terminal being in communication with the valve outlet for the hydronic medium, said first connection terminal and second connection terminal being connectable into a return pipe of the hydronic installation. The valve housing is connected to a connection socket providing a third connection terminal and a fourth connection terminal, said third connection terminal and fourth connection terminal being connectable into a supply pipe of the hydronic installation. The temperature sensor is adapted to measure the temperature of the hydronic medium within the connection socket and thereby supply pipe and within the valve housing and thereby return pipe. Q thermal insulator is preferably provided between the valve housing and the connection socket. These features are preferred when using the the invention in connection with such a pressure independent control valve.

Preferred developments of the invention are provided by the dependent claims and the description which follows.

Exemplary embodiments are explained in more detail on the basis of the drawing, in which:
- Figure 1: shows an exploded view a control valve according to the invention;
- Figure 2: shows a cross section of a control valve according to the invention;
- Figure 3: shows a block diagram of a control valve according to the invention.

The present invention relates to a hydronic control valve 10. Such a hydronic control valve 10 is used e.g. in hydronic heating or cooling installations to control the flow of a hydronic medium. The invention will below be described for a pressure independent control valve. However, the invention shall not be limited to such a pressure independent control valve. A pressure independent control valve is used to control a defined pressure differential between a supply pipe and a return pipe of the hydronic heating or cooling installation.

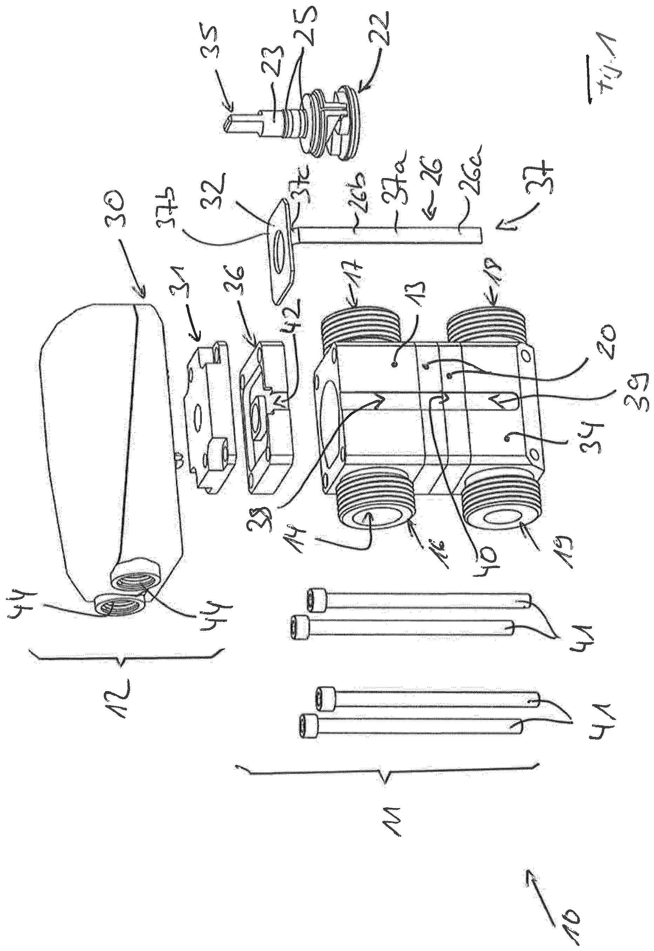

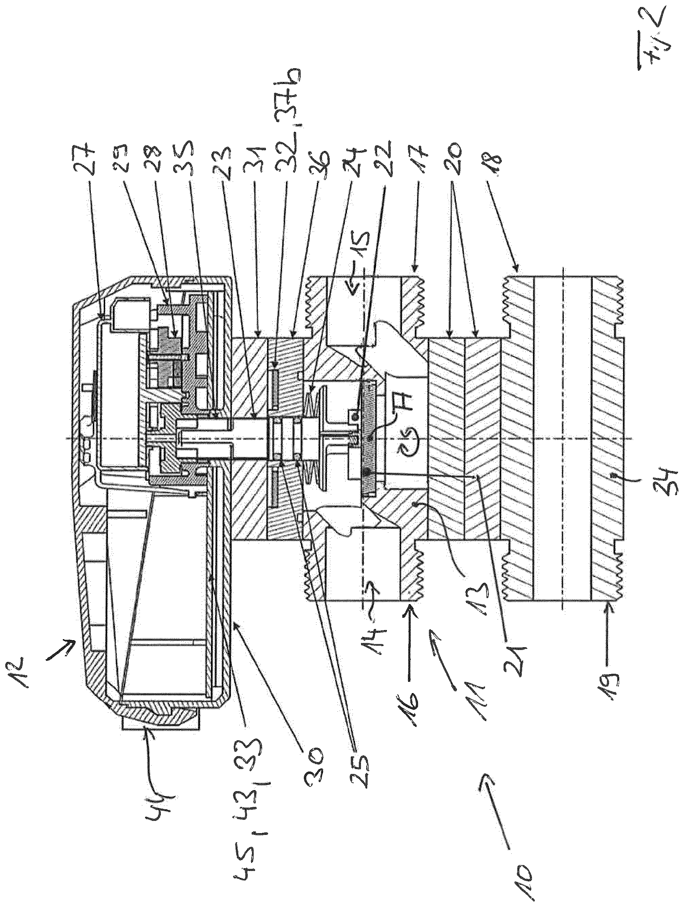

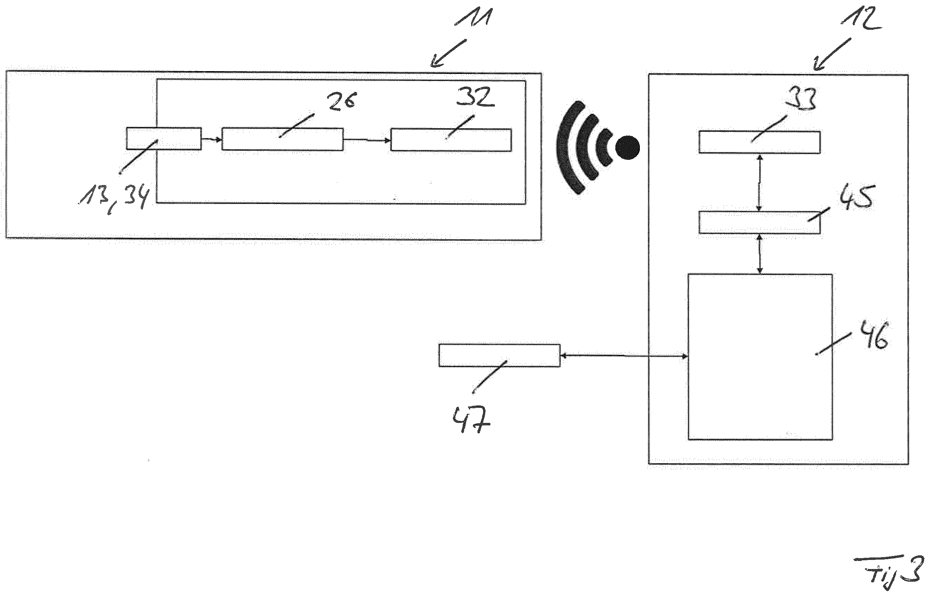

Figures 1 to 3 illustrate a preferred embodiment of a hydronic control valve 10 designed as an electrical or electronic, temperature-difference pressure independent control valve. Such an electrical or electronic, temperature-difference pressure independent control valves maintains a required flow rate constant independently from the defined pressure differential between the supply pipe and the return pipe as a function of a difference of temperature of the hydronic medium within the temperature supply pipe and the temperature of the hydronic medium within return pipe.

The hydronic control valve 10 comprises a valve unit 11 and an actuator unit 12.

The valve unit 11 of the hydronic control valve 10 comprises a valve housing 13. The valve housing 13 comprises a valve inlet 14 for the hydronic medium and a valve outlet 15 for the hydronic medium. The valve inlet 14 and the valve outlet 15 of the valve housing 11 are connectable into a pipe, preferably to a return pipe, of a hydronic installation. A first connection terminal 16 of the valve housing 13 being in communication with the valve inlet 14 and a second connection terminal 17 of the valve housing 13 being in communication with the valve outlet 15 provide the connectivity into the return pipe.

In the shown embodiment, the valve housing 13 is connected to a connection socket 34 comprising a third connection terminal 18 and a fourth connection terminal 19, said third connection terminal 18 and fourth connection terminal 19 being connectable into a pipe, preferably into the supply pipe, of the hydronic installation.

The valve housing 13 providing the first connection terminal 16 and the second connection terminal 17 is connected to the connection socket 34 providing the third connection terminal 18 and the fourth connection terminal 19. The valve housing 13 and the connection socket 34 are separated by thermal insulations 20.

The valve housing 13 accommodates a valve seat 21. The valve seat 21 acts together with a valve body 22. The hydronic control valve 10 is closed, namely the flow though the valve housing 13 from the valve inlet 14 to the valve outlet 15 is stopped, when the valve body 22 is in a first relative position relative the valve seat 21. The hydronic control valve 10 is opened, namely the flow though the valve housing 13 from the valve inlet 14 to the valve outlet 15 is allowed, when the valve body 22 is in a second relative position relative to the valve seat 21.

In order to change the relative position of the valve body 22 versus the valve seat 21 the valve body 22 becomes rotated around a longitudinal axis A of the same.

The valve body 22 is preferably provided by a ceramic disc carried by a valve shaft 23. A spring element 24 tends to press the valve body 22 in the direction of the valve seat 21. To open the valve the valve body 22 needs to be rotated relative to the valve seat 21 by the valve shaft 23 around the longitudinal axis A. Sealing elements 25 seal the valve shaft 23 within the valve housing 13.

The valve unit 11 of the hydronic control valve 10 comprises further a temperature sensor 26 measuring the temperature of the hydronic medium. In the shown embodiment, the temperature sensor 26 is adapted to measure the temperature of the hydronic medium within the supply pipe and within the return pipe.

In the shown embodiment, the temperature sensor 26 comprises two sensitive sections, a first section 26a for measuring the hydronic medium temperature within the connection socket 34 or supply pipe and a second section 26b for measuring the hydronic medium temperature within the valve housing 13 or within the return pipe.

The actuator unit 12 of the hydronic control valve 10 comprises an electrical or electronic actuator 27 for operating the valve body 22 of the valve unit 11 as a function of the temperature of a hydronic medium measured by the temperature sensor 26.

In the shown embodiment, the actuator 27 operates the valve body 22 of the valve unit 11 as a function of the difference of the temperature of hydronic medium within the supply pipe and the temperature of hydronic medium within the return pipe.

The electrical or electronic actuator 27 of the actuator unit 12 is provided by an electromotor. The electromotor 27 acts on the valve body 22 through a gear 28 positioned within a gear housing 29 and an actuator shaft 35. The electromotor 27, the gear 28 and the gear housing 29 are accommodated within a housing 30 of the actuator unit 12.

The actuator unit 12 is mounted to the valve unit 11 through an adapter body 31 and a valve cover 36.

The valve unit 11 comprises a RFID transmitter 32. The temperature sensor 26 is connected to RFID transmitter 32.

The actuator unit 12 comprises a RFID receiver 33. The electrical or electronic actuator 27 is connected to RFID receiver 33.

The temperature measurement signals provided by the temperature sensor 26 of the valve unit 11 are wirelessly transmitted from the RFID transmitter 32 of the valve unit 11 to the RFID receiver 33 of the actuator unit 12. No wiring is needed between the temperature sensor 26 of the valve unit 11 and the actuator unit 12.

The temperature sensor 26 and the RFID transmitter 32 are both provided by printed circuit board 37, preferably by a flex-rigid printed circuit board. A first section 37a of the flex-rigid printed circuit board 37, preferably being rigid, provides the temperature sensor 26. A second section 37b of the flex-rigid printed circuit board 37, preferably being rigid, provides the RFID transmitter 32. A third section 37c of the flex-rigid printed circuit board 37, preferably being flexible, connects the temperature sensor 26 and RFID transmitter 32.

It should be noted even one single flexible printed circuit board 37 can be used to provide the sections 37a, 37b and 37c. Further, a rigid printed circuit board 37 can be used to provide the RFID transmitter 32. In this case the temperature sensor 26 would we wired to the RFID transmitter 32.

The first section 37a of the printed circuit board 37 providing the temperature sensor 26 is accommodated in a groove 38 of the valve housing 13, in a groove 39 the connection socket 34 and in groove 40 of the thermal insulation 20. The section 26a of the temperature sensor 26 for measuring the hydronic medium temperature within the connection socket 34 or supply pipe is positioned within the groove 39 of the connection socket 34. The second section 26b for measuring the hydronic medium temperature within the valve housing 13 or within the return pipe is positioned within the groove 38 of the valve housing 33. The grooves 38, 39, 40 are axially aligned providing a common grove structure extending along the valve housing 13, the connection socket 34 and the thermal insulation 20 between the valve housing 13 and the connection socket 34.

The second section 37b of the printed circuit board 37 providing the RFID transmitter 32 is accommodated between the valve cover 36 and the adapter body 31. A recess with valve cover 36 is adapted to receive the second section 37b of the printed circuit board 37. The adapter body 31 is adapted to be positioned between the valve cover 36 and the actuator unit 12.

The adapter body 31, the valve cover 36, the valve housing 13, the thermal insulation 20 and the connection socket 34 are mounted together by screws 41 extending through recesses of the above components 31, 36, 13, 20 and 34.

The second section 37b of the printed circuit board 37 being accommodated between the valve cover 36 and the adapter body 31 and the first section 37a of the printed circuit board 37 being accommodated with the grooves 38, 39 of the valve housing 13 and the connection socket 34 are connected by the section 37c of the printed circuit board 37 being bent by 90° and extending through an opening 42 of the valve cover 36.

The RFID transmitter 32 of the valve unit 11 is passive. The RFID receiver 33 of the actuator unit 12 is active and provides energy for the RFID operation. The actuator housing 30 has openings 44 through which the actuator 27 is connectable to a power source.

The RFID receiver 33 of the actuator unit 12 is preferably integrated into a printed circuit board 43 of the actuator unit 12. The printed circuit board 43 of the actuator unit 12 of the actuator unit 12 is accommodated within the actuator housing 30. It is also possible to provide a separate printed circuit board for the RFID receiver 33.

The RFID receiver 33 of the actuator unit 12 receives the temperature signals provided by the temperature sensor 26 of the valve unit 11, namely the temperature of the hydronic medium with the return pipe and the temperature of the hydronic medium with the supply pipe.

The printed circuit board 43 of the actuator unit 12 provides a processor 45 for calculating the difference between the temperature of the hydronic medium with the return pipe and the temperature of the hydronic medium with the supply pipe and for generating a control variable for the actuator 27 such that the actuator 27 can open or close the control valve 10 as a function of this temperature difference.

The actuator unit 12 comprises further a communication module 46 through which the temperature measurement signals received by the RFID receiver 33 are communicated to a building management system 47.

The communication module 46 might provide Ethernet or Sylkbus or Wi-Fi communication.

The invention has been described for a pressure independent control valve. However, the invention shall not be limited to such a pressure independent control valve. When using the invention in connection with other control valve, the connection socket 34 and thermal insulators 20 might not be present. In this case the temperature sensor 26 will measure only one temperature, namely the temperature of the hydronic medium within the valve housing 13. Further, the valve seat 21 might be an integral part of the valve housing 13. Further, it is possible that the valve body 22 is moved in linear direction relative to the valve seat 21 to open and close the control valve.

### List of reference signs

- 10: control valve
- 11: valve unit
- 12: actuator unit
- 13: valve housing
- 14: valve outlet
- 15: valve inlet
- 16: first connection terminal
- 17: second connection terminal
- 18: third connection terminal
- 19: fourth connection terminal
- 20: thermal insulation
- 21: valve seat
- 22: valve body
- 23: valve shaft
- 24: spring element
- 25: sealing element
- 26: temperature sensor
- 26a: section
- 26b: section
- 27: actuator
- 28: gear
- 29: gear housing
- 30: housing
- 31: adapter body
- 32: RFID transmitter
- 33: RFID receiver
- 34: connection socket
- 35: actuator shaft
- 36: valve cover
- 37: printed circuity board
- 37a: section
- 37b: section
- 37c: section
- 38: groove
- 39: groove
- 40: groove
- 41: screw
- 42: opening
- 43: printed circuit board
- 44: opening
- 45: processor
- 46: communication module
- 47: building management system

## Claims

1. Hydronic control valve (10) for a hydronic installation, comprising:
a valve unit (11), the valve unit (11) having
a valve housing (13) providing a valve inlet (14) for a hydronic medium and a valve outlet (15) for the hydronic medium, said valve inlet (14) and valve outlet (15) being connectable into a pipe of the hydronic installation,
a valve seat (21),
a valve body (22) acting together with the valve seat (21),
a temperature sensor (26) measuring the temperature of the hydronic medium,
an actuator unit (12), the actuator unit (12) having
an electrical or electronic actuator (27) for operating the valve body (22) of the valve unit as a function of the temperature of a hydronic medium measured by the temperature sensor (26),
**characterized in that**
the valve unit (11) comprises a RFID transmitter (32), the temperature sensor (26) being connected to RFID transmitter (32),
wherein the temperature sensor (26) and the RFID transmitter (32) are both provided by printed circuit board (37), a first section (37a) of the printed circuit board (37) providing the temperature sensor (26), a second section (37b) of the printed circuit board (37) providing the RFID transmitter (32), a third section (37c) of the printed circuit board (37) connecting the temperature sensor (26) and RFID transmitter (32),
the actuator unit (12) comprises a RFID receiver (33), the electrical or electronic actuator (27) being connected to RFID receiver (33),
the temperature measurement signals provided by the temperature sensor (26) of the valve unit (11) are wirelessly transmitted from the RFID transmitter (32) of the valve unit (11) to the RFID receiver (33) of the actuator unit (12).

2. Control valve as claimed in claim 1, **characterized in that** the temperature sensor (26) and the RFID transmitter (32) are both provided by a flex-rigid printed circuit board, the first section (37a) being rigid, the second section (37b) being rigid and the third section (37c) being flexible.

3. Control valve as claimed in claim 1 or 2, **characterized in that** the first section (37a) of the printed circuit board (37) providing the temperature sensor (26) is accommodated in a groove (38) of the valve housing (13).

4. Control valve as claimed in one of claims 1 to 3, **characterized in that** the second section (37b) of the printed circuit board (37) providing the RFID transmitter (32) is accommodated between a valve cover (36) and an adapter body (31).

5. Control valve as claimed in one of claims 1 to 4, **characterized in that** the RFID transmitter (32) of the valve unit (11) is passive.

6. Control valve as claimed in one of claims 1 to 5, **characterized in that** the RFID receiver (33) of the actuator unit (12) is active providing energy for the RFID operation.

7. Control valve as claimed in one of claims 1 to 6, **characterized in that** the RFID receiver (33) of the actuator unit (12) is integrated into a printed circuit board (43) of the actuator unit (12).

8. Control valve as claimed in one of claims 1 to 7, **characterized in that** the actuator unit (12) comprises a communication module (46) through which the temperature measurement signals received by the RFID receiver (33) are communicated to a building management system (47).

9. Control valve as claimed in one of claims 1 to 8, **characterized in that** the same is a pressure independent control valve.

10. Control valve as claimed in one of claims 1 to 9, **characterized in that**
the valve housing (13) provides a first connection terminal (16) being in communication with the valve inlet (14) for the hydronic medium and a second connection terminal (17) being in communication with the valve outlet (15) for the hydronic medium, said first connection terminal (16) and second connection terminal (17) being connectable into a return pipe of the hydronic installation,
the valve housing (13) is connected to a connection socket (34) providing a third connection terminal (18) and a fourth connection terminal (19), said third connection terminal (18) and fourth connection terminal (19) being connectable into a supply pipe of the hydronic installation.

11. Control valve as claimed in one of claims 10, **characterized in that** the temperature sensor (26) is adapted to measure the temperature of the hydronic medium within the connection socket (34) and thereby supply pipe and/or within the valve housing (13) and thereby return pipe.

12. Control valve as claimed in one of claims 10 or 11, **characterized in that** the temperature sensor (26) is accommodated in a groove (38) of the valve housing (13) and in a grove (39) of the connection socket (34).

13. Control valve as claimed in one of claims 10 to 12, **characterized in that** a thermal insulator is provided between the valve housing (13) and the connection socket (34).

## Patentansprüche

1. Hydronisches Regelventil (10) für eine hydronische Anlage, umfassend:
eine Ventileinheit (11), wobei die Ventileinheit (11) Folgendes aufweist:
ein Ventilgehäuse (13), das einen Ventileinlass (14) für ein hydronisches Medium und einen Ventilauslass (15) für das hydronische Medium bereitstellt, wobei der Ventileinlass (14) und der Ventilauslass (15) mit einem Rohr der hydronischen Anlage verbindbar sind,
einen Ventilsitz (21),
einen Ventilkörper (22), der mit dem Ventilsitz (21) zusammenwirkt,
einen Temperatursensor (26), der die Temperatur des hydronischen Mediums misst,
eine Aktuatoreinheit (12), wobei die Aktuatoreinheit (12) Folgendes aufweist:
einen elektrischen oder elektronischen Aktuator (27) zum Betreiben des Ventilkörpers (22) der Ventileinheit in Abhängigkeit der durch den Temperatursensor (26) gemessenen Temperatur eines hydronischen Mediums,
**dadurch gekennzeichnet, dass**
die Ventileinheit (11) einen RFID-Sender (32) umfasst, wobei der Temperatursensor (26) mit dem RFID-Sender (32) verbunden ist,
wobei der Temperatursensor (26) und der RFID-Sender (32) beide durch eine Leiterplatte (37) bereitgestellt sind, wobei ein erster Abschnitt (37a) der Leiterplatte (37) den Temperatursensor (26) bereitstellt, ein zweiter Abschnitt (37b) der Leiterplatte (37) den RFID-Sender (32) bereitstellt und ein dritter Abschnitt (37c) der Leiterplatte (37) den Temperatursensor (26) und den RFID-Sender (32) verbindet,
die Aktuatoreinheit (12) einen RFID-Empfänger (33) umfasst, wobei der elektrische oder elektronische Aktuator (27) mit dem RFID-Empfänger (33) verbunden ist,
die Temperaturmesssignale, die von dem Temperatursensor (26) der Ventileinheit (11) geliefert werden, drahtlos von dem RFID-Sender (32) der Ventileinheit (11) zu dem RFID-Empfänger (33) der Aktuatoreinheit (12) übertragen werden.

2. Regelventil nach Anspruch 1, **dadurch gekennzeichnet, dass** der Temperatursensor (26) und der RFID-Sender (32) beide durch eine starr-flexible Leiterplatte bereitgestellt sind, wobei der erste Abschnitt (37a) starr ist, der zweite Abschnitt (37b) starr ist und der dritte Abschnitt (37c) flexibel ist.

3. Regelventil nach Anspruch 1 oder 2, **dadurch gekennzeichnet, dass** der erste Abschnitt (37a) der Leiterplatte (37), der den Temperatursensor (26) bereitstellt, in einer Nut (38) des Ventilgehäuses (13) aufgenommen ist.

4. Regelventil nach einem der Ansprüche 1 bis 3, **dadurch gekennzeichnet, dass** der zweite Abschnitt (37b) der Leiterplatte (37), der den RFID-Sender (32) bereitstellt, zwischen einer Ventilabdeckung (36) und einem Adapterkörper (31) aufgenommen ist.

5. Regelventil nach einem der Ansprüche 1 bis 4, **dadurch gekennzeichnet, dass** der RFID-Sender (32) der Ventileinheit (11) passiv ist.

6. Regelventil nach einem der Ansprüche 1 bis 5, **dadurch gekennzeichnet, dass** der RFID-Empfänger (33) der Aktuatoreinheit (12) aktiv ist und die Energie für den RFID-Betrieb liefert.

7. Regelventil nach einem der Ansprüche 1 bis 6, **dadurch gekennzeichnet, dass** der RFID-Empfänger (33) der Aktuatoreinheit (12) in eine Leiterplatte (43) der Aktuatoreinheit (12) integriert ist.

8. Regelventil nach einem der Ansprüche 1 bis 7, **dadurch gekennzeichnet, dass** die Aktuatoreinheit (12) ein Kommunikationsmodul (46) umfasst, durch das die Temperaturmesssignale, die von dem RFID-Empfänger (33) empfangen werden, an ein Gebäudemanagementsystem (47) übermittelt werden.

9. Regelventil nach einem der Ansprüche 1 bis 8, **dadurch gekennzeichnet, dass** dasselbe ein druckunabhängiges Regelventil ist.

10. Regelventil nach einem der Ansprüche 1 bis 9, **dadurch gekennzeichnet, dass**
das Ventilgehäuse (13) ein erste Anschlussstelle (16), die in Verbindung mit dem Ventileinlass (14) für das hydronische Medium steht, und eine zweite Anschlussstelle (17), die in Verbindung mit dem Ventilauslass (15) für das hydronische Medium steht, bereitstellt, wobei die erste Anschlussstelle (16) und die zweite Anschlussstelle (17) mit einem Rücklaufrohr der hydronischen Anlage verbindbar sind,
das Ventilgehäuse (13) mit einer Anschlusskupplung (34) verbunden ist, die eine dritte Anschlussstelle (18) und eine vierte Anschlussstelle (19) bereitstellt, wobei die dritte Anschlussstelle (18) und die vierte Anschlussstelle (19) mit einem Versorgungsrohr der hydronischen Anlage verbindbar sind.

11. Regelventil nach einem der Ansprüche 10, **dadurch gekennzeichnet, dass** der Temperatursensor (26) geeignet ist, die Temperatur des hydronischen Mediums in der Anschlusskupplung (34) und dadurch dem Versorgungsrohr und/oder in dem Ventilgehäuse (13) und dadurch dem Rücklaufrohr zu messen.

12. Regelventil nach einem der Ansprüche 10 oder 11, **dadurch gekennzeichnet, dass** der Temperatursensor (26) in einer Nut (38) des Ventilgehäuses (13) und in einer Nut (39) der Anschlusskupplung (34) aufgenommen ist.

13. Regelventil nach einem der Ansprüche 10 bis 12, **dadurch gekennzeichnet, dass** ein Wärmedämmstoff zwischen dem Ventilgehäuse (13) und der Anschlusskupplung (34) bereitgestellt ist.

## Revendications

1. Vanne de commande hydronique (10) pour une installation hydronique, comprenant :
une unité à vanne (11), l'unité à vanne (11) ayant
un logement de vanne (13) fournissant une entrée de vanne (14) pour un fluide hydronique et une sortie de vanne (15) pour le fluide hydronique, lesdites entrée de vanne (14) et sortie de vanne (15) étant raccordables dans un tuyau de l'installation hydronique,
un siège de vanne (21),
un corps de vanne (22) agissant conjointement avec le siège de vanne (21),
un capteur de température (26) mesurant la température du fluide hydronique,
une unité à actionneur (12), l'unité à actionneur (12) ayant
un actionneur électrique ou électronique (27) pour actionner le corps de vanne (22) de l'unité à vanne en fonction de la température d'un fluide hydronique mesurée par le capteur de température (26),
**caractérisée en ce que**
l'unité à vanne (11) comprend un transmetteur RFID (32), le capteur de température (26) étant connecté au transmetteur RFID (32),
dans laquelle le capteur de température (26) et le transmetteur RFID (32) sont tous les deux fournis par une carte de circuit imprimé (37), une première section (37a) de la carte de circuit imprimé (37) fournissant le capteur de température (26), une deuxième section (37b) de la carte de circuit imprimé (37) fournissant le transmetteur RFID (32), une troisième section (37c) de la carte de circuit imprimé (37) connectant le capteur de température (26) et le transmetteur RFID (32),
l'unité à actionneur (12) comprend un récepteur RFID (33), l'actionneur électrique ou électronique (27) étant connecté au récepteur RFID (33),
les signaux de mesure de température fournis par le capteur de température (26) de l'unité à vanne (11) sont transmis sans fil à partir du transmetteur RFID (32) de l'unité à vanne (11) au récepteur RFID (33) de l'unité à actionneur (12).

2. Vanne de commande selon la revendication 1, **caractérisée en ce que** le capteur de température (26) et le transmetteur RFID (32) sont tous les deux fournis par une carte de circuit imprimé flexorigide, la première section (37a) étant rigide, la deuxième section (37b) étant rigide et la troisième section (37c) étant flexible.

3. Vanne de commande selon la revendication 1 ou 2, **caractérisée en ce que** la première section (37a) de la carte de circuit imprimé (37) fournissant le capteur de température (26) est logée dans une rainure (38) du logement de vanne (13).

4. Vanne de commande selon l'une des revendications 1 à 3, **caractérisée en ce que** la deuxième section (37b) de la carte de circuit imprimé (37) fournissant le transmetteur RFID (32) est logée entre un couvercle de vanne (36) et un corps adaptateur (31).

5. Vanne de commande selon l'une des revendications 1 à 4, **caractérisée en ce que** le transmetteur RFID (32) de l'unité à vanne (11) est passif.

6. Vanne de commande selon l'une des revendications 1 à 5, **caractérisée en ce que** le récepteur RFID (33) de l'unité à actionneur (12) est actif, fournissant de l'énergie pour le fonctionnement RFID.

7. Vanne de commande selon l'une des revendications 1 à 6, **caractérisée en ce que** le récepteur RFID (33) de l'unité à actionneur (12) est intégré dans une carte de circuit imprimé (43) de l'unité à actionneur (12).

8. Vanne de commande selon l'une des revendications 1 à 7, **caractérisée en ce que** l'unité à actionneur (12) comprend un module de communication (46) par l'intermédiaire duquel les signaux de mesure de température reçus par le récepteur RFID (33) sont communiqués à un système de gestion de bâtiment (47).

9. Vanne de commande selon l'une des revendications 1 à 8, **caractérisée en ce que** celle-ci est une vanne de commande indépendante de la pression.

10. Vanne de commande selon l'une des revendications 1 à 9, **caractérisée en ce que**
le logement de vanne (13) fournit une première borne de connexion (16) en communication avec l'entrée de vanne (14) pour le fluide hydronique et une deuxième borne de connexion (17) en communication avec la sortie de vanne (15) pour le fluide hydronique, lesdites première borne de connexion (16) et deuxième borne de connexion (17) étant connectables dans un tuyau de retour de l'installation hydronique,
le logement de vanne (13) est connecté à une douille de connexion (34) fournissant une troisième borne de connexion (18) et une quatrième borne de connexion (19), lesdites troisième borne de connexion (18) et quatrième borne de connexion (19) étant connectables dans un tuyau d'alimentation de l'installation hydronique.

11. Vanne de commande selon l'une des revendications 10, **caractérisée en ce que** le capteur de température (26) est adapté pour mesurer la température du fluide hydronique à l'intérieur de la douille de connexion (34) et ainsi du tuyau d'alimentation et/ou à l'intérieur du logement de vanne (13) et ainsi du tuyau de retour.

12. Vanne de commande selon l'une des revendications 10 et 11, **caractérisée en ce que** le capteur de température (26) est logé dans une rainure (38) du logement de vanne (13) et dans une rainure (39) de la douille de connexion (34).

13. Vanne de commande selon l'une des revendications 10 à 12, **caractérisée en ce qu'**un isolant thermique est prévu entre le logement de vanne (13) et la douille de connexion (34).
